# DEMANDE DE BREVET EUROPEEN

(11) **EP 2 647 466 A1**
(43) Date de publication de la demande: **09.10.2013**
(21) Numéro de dépôt: 12162933.1
(22) Date de dépôt: 03.04.2012
(51) Int. Cl.: B23K 35/02, B23K 35/36, B23K 35/362, B23K 35/368, B23K 35/40

(54) **Procédé de fabrication d'un fil fourré comprenant des lubrifiants empêchant sa rupture lors du tréfilage ou du laminage**

(71) Demandeur: FRO - Air Liquide Welding Italia S.P.A., 37135 Verone (IT)
(72) Inventeur: Scappin, Michele, 31003 CASTELFRANCO (IT); Toffanello, Laura, 35013 Cittadella (PD) (IT)
(74) Mandataire: Pittis, Olivier

(57) **Abrégé**

L'invention porte sur un procédé de fabrication d'un fil fourré à partir d'une bande métallique et d'éléments de remplissage, dans lequel on réalise successivement un formage en « U » ; un dépôt de flux formé desdits éléments de remplissage, un formage en « O » et un soudage de la bande métallique mise pour obtenir un fil soudé contenant le flux de remplissage et ayant un diamètre initial d'au moins 10 mm. Ensuite, on tréfile et/ou on lamine le fil de diamètre initial d'au moins 10 mm jusqu'à obtenir un fil fourré de diamètre final inférieur à 5 mm. Afin de faciliter la répartition interne du flux lors de son tréfilage ou laminage, ou les deux, on incorpore au flux de remplissage, une proportion inférieure à 5% en masse (% en masse de flux) d'une ou plusieurs matières favorisant le glissage du flux de remplissage dans le fil, en particulier du graphite ou du bisulfure de molybdène. Les fils fourrés ainsi fabriqués sont utilisables en soudage à l'arc de type MIG/MAG ou à l'arc submergé.

## Description

L'invention concerne un procédé de fabrication d'un fil fourré étanche destiné au soudage, après son remplissage avec des éléments formants le flux interne du fil fourré, contenant des éléments métalliques et éventuellement non métalliques en partant d'un feuillard qui forme un tube d'un diamètre supérieur à 10 mm au moment de la fermeture et qui est ensuite soumis à plusieurs passes de tréfilage et/ou de laminage pour arriver au produit fini de diamètre désiré inférieur à 5 mm.

Les fils fourrés sont utilisés dans certains procédés de soudage, notamment à l'arc, par exemple en soudage MIG/MAG ou en soudage à l'arc submergé.

Un fil fourré est habituellement constitué d'une enveloppe externe, encore appelée « feuillard », formée d'une bande métallique mise sous forme tubulaire, et d'un flux de interne formé d'éléments de remplissage, tels des poudres ou des granulés. Un fil fourré de soudage est notamment décrit par les documents US-A-6787736 ou FR-A-2766399.

La fabrication d'un fil fourré peut être réalisée selon plusieurs méthodes différentes connues présentant chacune des avantages et des inconvénients. Cependant, quelle que soit la méthode de fabrication utilisée, le tréfilage du tube rempli de poudres jusqu'à son diamètre final est souvent critique, en particulier pour les fils dont le taux de remplissage est supérieur à 10 % en masse et ayant un diamètre initial supérieur à 10 mm. En effet, lors de leur fabrication, ces types de fils ont tendance à se rompre, en particulier lors des étapes de tréfilage pendant lesquelles leur diamètre est réduit.

Le problème qui se pose est alors de proposer un procédé de fabrication d'un fil fourré de type soudé et étanche, donc un fil non ou très peu sensible à la reprise en humidité, qui soit simple à mettre en oeuvre et permette de réaliser une ou des étapes de tréfilage dudit fil jusqu'à son diamètre final, sans engendrer de rupture ou détérioration de celui-ci et ce, même lorsque son diamètre de fermeture est supérieur à 10 mm et/ou que son taux de remplissage est supérieur à 10% en masse environ.

La solution est un procédé de fabrication d'un fil fourré pour soudage à partir d'une bande métallique et d'éléments de remplissage, dans lequel :
a) on rapproche progressivement, l'un vers l'autre, les deux bords longitudinaux de la bande métallique pour lui conférer une forme de « U », c'est-à-dire une forme de gouttière de section en « U »,
b) après formage en « U », on dépose un flux de remplissage formé desdits éléments de remplissage, de préférence pulvérulent, granulaire ou un mélange des deux, entre les bords longitudinaux de la bande métallique,
c) on poursuit le formage par rapprochement, l'un vers l'autre, les deux bords longitudinaux de la bande métallique en forme de « U » jusqu'à aboutir à une forme tubulaire en « O » non scellée, le flux étant compris dans la forme tubulaire ainsi formé,
d) on soude ensemble les deux bords longitudinaux de la bande métallique mise sous forme tubulaire pour obtenir un fil soudé, et donc étanche, contenant le flux de remplissage et ayant un diamètre initial d'au moins 10 mm, et
e) on tréfile et/ou on lamine le fil de diamètre initial d'au moins 10 mm jusqu'à obtenir un fil fourré de diamètre final inférieur à 5 mm.

Selon le procédé de l'invention, le flux de remplissage utilisé contiennent une proportion inférieure à 5% en masse (% en masse de flux) d'une ou plusieurs matières favorisant le glissage du flux de remplissage dans le fil, au moins pendant l'étape e).

Selon le cas, le procédé de l'invention peut comprendre en outre l'une ou plusieurs des caractéristiques additionnelles suivantes :
- le flux de remplissage contiennent une proportion inférieure à 4% en masse, avantageusement inférieure ou égale à environ 2% en masse de flux de la ou des matières favorisant le glissage du flux de remplissage dans le fil.
- la ou les matières favorisant le glissage du flux de remplissage dans le fil a/ont une granulométrie moyenne inférieure à 150 µm pour réduire au maximum la quantité de lubrifiants utilisées en préservant l'effet de lubrification.
- la ou les matières favorisant le glissage du flux de remplissage dans le fil sont préalablement agglomérées et/ou mélangées avec les autres éléments du flux de remplissage.
- la ou les matières favorisant le glissage du flux de remplissage dans le fil contiennent une proportion en eau inférieure à 5 % en masse de manière à limiter la proportion d'oxygène et d'hydrogène diffusible susceptible d'être transférée au dépôt, c'est-à-dire au joint, pendant le soudage avec fusion du fil.
- la ou les matières favorisant le glissage du flux de remplissage dans le fil sont choisies parmi le MoS₂, le graphite, WS₂, le mica, le Téflo^{™}, fluorure de carbone, les silicates de sodium (Na), de potassium (K) et/ou de lithium (Li).
- la ou les matières favorisant le glissage du flux de remplissage dans le fil sont de préférence le graphite et le MoS₂.
- à l'étape d), le soudage est opéré par un faisceau laser.
- à l'étape e), on tréfile et/ou on lamine le fil jusqu'à diamètre final inférieur ou égal à 4 mm, de préférence entre 0,8 à 4 mm de diamètre, typiquement d'au moins 1,2 mm.
- à l'étape b), le taux de remplissage du fil est supérieur à 9 % en masse, de préférence entre 12 et 50% car les lubrifiants sont plus utiles dans la production des fils à fort taux de remplissage (i. e. > 10%).
- la bande métallique est en acier au carbone ou en acier inoxydable.
- le flux de remplissage contient en outre d'autres éléments choisis parmi la poudre de fer, le rutile, CaF₂, les ferroalliages de Mn, Si, Cr, Mo, Ni, B et/ou Ti, et les poudres minérales du type oxydes de Mg ou d'A1.
- une composition typique du flux (% en masse de poudre de flux) est de 50 à 80 % de poudre de fer, de 5 à 15 % de ferroalliage de silicium, de 10 à 30% de ferroalliages de manganèse ou de manganèse métallique, et d'autres ferroalliages si nécessaires au dépôt comme les ferroalliages de Ni, Mo et Cr.
- le tréfilage est opéré à l'aide de galets presseurs ou des filières.
- le procédé est un procédé en continu mis en oeuvre sur une chaîne de fabrication en continu de fil fourré de soudage.
- le fil se déplace au fur et à mesure des différentes étapes susmentionnées, de préférence le fil se déplace grâce à des galets d'entraînement motorisés.
- le flux est à base métallique, c'est-à-dire qu'il comprend de la poudre de fer mélangée avec des ferroalliages de Mn, Si, Cr, Mo, Ni, B et/ou Ti.
- le flux est à base rutile, c'est-à-dire qu'il comprend de la poudre de rutile mélangée avec des ferroalliages de Mn, Si, Cr, Mo, Ni, B et/ou Ti, et/ou des poudres minérales comme des oxydes de Mg et/ou A1.
- le flux est à base de fluorure (CaF₂), c'est-à-dire qu'il comprend de la poudre de CaF₂ mélangée avec des ferroalliages de Mn, Si, Cr, Mo, Ni, B et/ou Ti, et/ou des poudres minérales comme des oxydes de Mg et/ou A1.
- le fil rempli est recuit, soit en ligne, soit dans un four, et les lubrifiants mélangés à la poudre formant le flux aident le glissement du flux interne au sein du fil, après recuit.

Par ailleurs, l'invention porte aussi sur un fil fourré de soudage formé d'une enveloppe métallique externe et d'un flux interne, en particulier directement obtenu par un procédé de fabrication selon l'invention, comprenant une enveloppe en acier au carbone ou en acier inoxydable, et un flux de remplissage interne, **caractérisé en ce que** le fil a un diamètre final inférieur à 5 mm, et le flux de remplissage contient une proportion inférieure à 5% en masse (% en masse de flux) d'une ou plusieurs matières favorisant le glissage du flux de remplissage dans le fil choisies parmi le MoS₂, le graphite, WS₂, le mica, le Téflon^{™}, le fluorure de carbone, et les silicates de sodium, de potassium et/ou de lithium, ou leur mélange.

Selon le cas, le fil fourré de l'invention peut comprendre l'une ou plusieurs des caractéristiques techniques suivantes :
- le flux de remplissage contient du MoS₂, du graphite, ou les deux.
- l'enveloppe métallique comprend une soudure longitudinale rendant le fil étanche à l'humidité notamment.
- le flux de remplissage contient une proportion inférieure à 2% en masse (% en masse de flux) d'une ou plusieurs matières favorisant le glissage du flux de remplissage dans le fil.
- le flux est à base métallique et comprend de la poudre de fer (Fe) mélangée avec des ferroalliages de Mn, Si, Cr, Mo, Ni, B et/ou Ti.
- le flux est à base rutile et comprend de la poudre de rutile (TiO₂) mélangée avec des ferroalliages de Mn, Si, Cr, Mo, Ni, B et/ou Ti, et/ou des poudres minérales comme des oxydes de Mg et/ou A1.
- le flux est à base de fluorure (CaF₂) et comprend de la poudre de CaF₂ mélangée avec des ferroalliages de Mn, Si, Cr, Mo, Ni, B et/ou Ti, et/ou des poudres
- le fil a un diamètre final compris entre 0,8 et 4 mm, typiquement d'au moins 1,2 mm.
- le flux de remplissage contient en outre d'autres éléments choisis parmi la poudre de fer, le rutile, CaF₂, les ferroalliages de Mn, Si, Cr, Mo, Ni, B et/ou Ti, et un ou des oxydes de Mg ou A1.
- une composition typique du flux (% en masse de poudre de flux) est de 50 à 80 % de poudre de fer, de 5 à 15 % de ferroalliage de silicium, de 10 à 30% de ferroalliages de manganèse ou de manganèse métallique, et si nécessaire, d'autres ferroalliages utiles au dépôt comme les ferroalliages de Ni, Mo et/ou Cr.

En outre, l'invention concerne aussi un procédé de soudage, en particulier à l'arc électrique, de préférence de soudage MIG/MAG ou à l'arc submergé, mettant en oeuvre un fil fourré de soudage fusible selon l'invention, en particulier obtenu directement par le procédé de fabrication selon l'invention.

L'invention va maintenant être mieux comprise grâce à la description détaillée suivante faite en références aux Figures annexées parmi lesquels :
- la Figure 1 représente la section d'un fil rempli où l'on distingue une concentration du flux ayant conduit à une rupture du fil pendant son tréfilage, et
- les Figures 2 et 3 représentent des courbes illustrant l'effort de déformation d'un flux avec des lubrifiants en différentes quantités pondérales (% en masse).

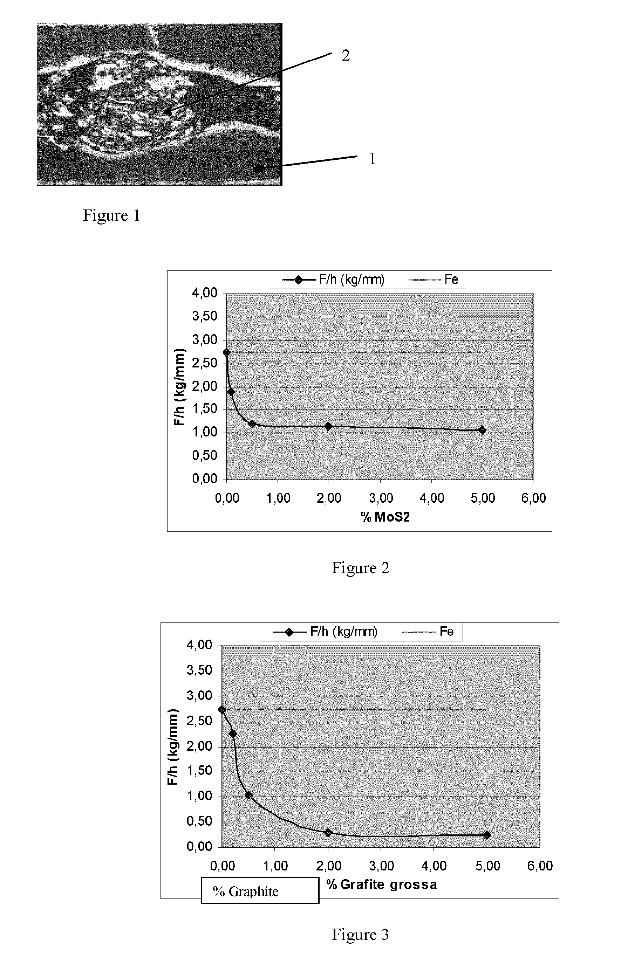

La Figure 1 montre la section d'un fil fourré de diamètre initial de 10 mm et de taux de remplissage de 10 %, qui s'est rompu pendant son tréfilage, sous l'effet d'une trop forte concentration de flux dans une zone localisée. Ceci s'est produit car le flux ne contenait pas de matières de glissage, tel du graphite ou du MoS₂, qui agissent comme des lubrifiants internes pour réduire l'effort de déformation interne du flux pendant son tréfilage.

A l'inverse, selon l'invention, l'addition d'une ou plusieurs matières favorisant le glissage du flux de remplissage dans le fil (encore appelées « matières de glissage ») permet d'éviter ce problème de rupture pendant le tréfilage car ces matières de glissage agissent comme des lubrifiants internes pour réduire l'effort de déformation interne du flux pendant le tréfilage. Ces matières de glissage interne, c'est-à-dire lubrifiantes, permettent au flux se déformer et de se répandre aisément dans le tube pendant la réduction du diamètre dudit fil par tréfilage et/ou laminage et ce, sans engendrer de rupture du fil.

En l'absence de telles matières de glissage, la déformabilité du flux est réduite et le flux ne peut pas aisément s'allonger avec le fil et se répandre uniformément dans celui-ci. La quantité de flux dans le tube va alors varier et engendrer une rupture de l'enveloppe du fil comme illustré en Figure 1.

Or, selon l'invention, on opère un remplissage du fil avec un flux de remplissage contenant, outre les éléments classiques, telles des poudres ou des granules d'éléments métalliques ou autres, par exemple de la poudre de fer, du rutile, du CaF₂, des ferroalliages de Mn, Si, Cr, Mo, Ni, B et/ou Ti ou des poudres minérales comme les oxydes de Mg ou A1, des éléments internes de lubrification, c'est-à-dire une ou plusieurs matières favorisant le glissage du flux qui, pour obtenir un bon glissage du flux, sont limitées en quantité pondérale à environ moins de 4% en masse, avantageusement à moins d'environ 2 % en masse.

Comme on peut le voir sur les Figures 2 et 3, en ajoutant dans le flux de remplissage des matières lubrifiantes, c'est-à-dire soit du graphite (Fig. 3), soit du bisulfure de molybdène ou MoS₂ (Fig. 2), l'effort de déformation de la poudre diminue progressivement pour atteindre un effort minimal entre 1,5 et 2% environ.

En fait, les Figures 2 et 3 permettent de comparer l'effort de déformation d'une poudre de remplissage (à base de poudre de fer) qui compose le flux par rapport à la même poudre additionnée d'un pourcentage croissant de lubrifiant, à savoir du graphite ou du bisulfure de molybdène. Ainsi, la ligne horizontale est le témoin pour lequel le flux de remplissage à base de poudre de fer (Fe) ne contient pas de lubrifiant, alors que la ligne décroissante montre que l'on assiste à une importante réduction de l'effort de déformation lors du tréfilage, dès lors que la proportion en lubrifiant (graphite ou MoS₂) augmente dans le flux interne du fil.

Au-delà de 2% en masse, l'ajout de matières lubrifiantes au flux du fil fourré n'engendre pas de réduction notable supplémentaire ; leur proportion pondérale est donc de préférence limitée à 2% au maximum.

De façon générale, les lubrifiants ajoutés au flux permettent de réduire l'effort de déformation du fil en facilitant le glissement de poudre formant le flux interne, au sein de l'enveloppe métallique constituant le feuillard, lors des opérations de réduction de diamètre du fil, en particulier lors d'un tréfilage.

De même, si le fil est recuit, la présence de lubrifiant(s) interne(s) au flux permet de faciliter le glissement et la répartition de la poudre formant le flux au sein du fil, après recuit.

Le procédé de fabrication de l'invention est particulièrement bien adapté à la fabrication de fils fourrés de soudage à l'arc, en particulier MIG/MAG ou à l'arc submergé.

## Revendications

1. Procédé de fabrication d'un fil fourré à partir d'une bande métallique et d'éléments de remplissage, dans lequel :
a) on rapproche progressivement, l'un vers l'autre, les deux bords longitudinaux de la bande métallique pour lui conférer une forme de « U »,
b) après formage en « U », on dépose un flux de remplissage formé desdits éléments de remplissage entre lesdits bords longitudinaux de la bande métallique,
c) on poursuit le formage par rapprochement, l'un vers l'autre, les deux bords longitudinaux de la bande métallique en forme de « U » jusqu'à aboutir à une forme tubulaire en « O » non scellée, le flux étant compris dans ladite forme tubulaire ainsi formé,
d) on soude ensemble les deux bords longitudinaux de la bande métallique mise sous forme tubulaire pour obtenir un fil soudé contenant le flux de remplissage et ayant un diamètre initial d'au moins 10 mm,
e) on tréfile et/ou on lamine le fil de diamètre initial d'au moins 10 mm jusqu'à obtenir un fil fourré de diamètre final inférieur à 5 mm,
**caractérisé en ce que** le flux de remplissage contiennent une proportion inférieure à 5% en masse (% en masse de flux) d'une ou plusieurs matières favorisant le glissage du flux de remplissage dans le fil, au moins pendant l'étape e).

2. Procédé selon la revendication précédente, **caractérisé en ce que** le flux de remplissage contiennent une proportion inférieure à 4% en masse de flux de la ou des matières favorisant le glissage du flux de remplissage dans le fil, de préférence inférieure ou égale à 2% en masse.

3. Procédé selon l'une des revendications précédentes, **caractérisé en ce que** la ou les matières favorisant le glissage du flux de remplissage dans le fil a/ont une granulométrie moyenne inferieure à 150 µm.

4. Procédé selon l'une des revendications précédentes, **caractérisé en ce que** la ou les matières favorisant le glissage du flux de remplissage dans le fil sont choisies parmi le MoS₂, le graphite, WS₂, le mica, le Téflon^{™}, le fluorure de carbone, et les silicates de sodium, de potassium et/ou de lithium, ou leur mélange.

5. Procédé selon l'une des revendications précédentes, **caractérisé en ce que** la ou les matières favorisant le glissage du flux de remplissage dans le fil sont choisies parmi le graphite et le MoS₂.

6. Procédé selon l'une des revendications précédentes, **caractérisé en ce qu'**à l'étape d), le soudage est opéré par un faisceau laser.

7. Procédé selon l'une des revendications précédentes, **caractérisé en ce qu'**à l'étape e), on tréfile et/ou on lamine le fil jusqu'à diamètre final entre 0,8 à 5 mm.

8. Procédé selon l'une des revendications précédentes, **caractérisé en ce qu'**à l'étape b), le taux de remplissage du fil est supérieur ou égal à 9 % en masse, de préférence entre 10 et 50 %.

9. Procédé selon l'une des revendications précédentes, **caractérisé en ce que** la bande métallique est en acier au carbone ou en acier inoxydable.

10. Procédé selon l'une des revendications précédentes, **caractérisé en ce que** le flux de remplissage contient en outre d'autres éléments choisis parmi la poudre de fer, le rutile, CaF₂, les ferroalliages de Mn, Si, Cr, Mo, Ni, B et/ou Ti, ou les oxydes de Mg ou A1.

11. Fil fourré de soudage formé d'une enveloppe métallique externe et d'un flux interne, en particulier directement obtenu par un procédé de fabrication selon l'un des revendications 1 à 10, comprenant une enveloppe en acier au carbone ou en acier inoxydable, et un flux de remplissage interne, **caractérisé en ce que** :
- le fil a un diamètre final inférieur à 5 mm, et
- le flux de remplissage contient une proportion inférieure à 5% en masse (% en masse de flux) d'une ou plusieurs matières favorisant le glissage du flux de remplissage dans le fil choisies parmi le MoS₂, le graphite, WS₂, le mica, le Téflon^{™}, le fluorure de carbone, et les silicates de sodium, de potassium et/ou de lithium, ou leur mélange.

12. Fil selon la revendication 11, **caractérisé en ce que** le flux de remplissage contient du MoS₂, du graphite, ou les deux.

13. Fil selon l'une des revendications 11 ou 12, **caractérisé en ce que** le flux de remplissage contient une proportion inférieure à 2% en masse (% en masse de flux) d'une ou plusieurs matières favorisant le glissage du flux de remplissage dans le fil.

14. Procédé de soudage à l'arc électrique mettant en oeuvre un fil fourré de soudage fusible, **caractérisé en ce que** le fil est selon l'une des revendications 11 à 13.

15. Procédé de soudage selon la revendication 14, **caractérisé en ce qu'**il est choisi parmi les procédés de soudage MIG/MAG ou à l'arc submergé.
